# EUROPEAN PATENT APPLICATION

(11) **EP 2 091 208 A1**
(43) Date of publication of application: **19.08.2009**
(21) Application number: 08290151.3
(22) Date of filing: 15.02.2008
(51) Int. Cl.: H04L 29/06

(54) **Method of operating an electronic device**

(71) Applicant: Alcatel Lucent, 75008 Paris (FR)
(72) Inventor: Glinka, Michael Frank, Dr., 90571 Schwaig bei Nürnberg (DE)
(74) Representative: Zinsinger, Norbert

(57) **Abstract**

The invention concerns a method of operating an electronic device (35), and the electronic device (35) to execute this method. The electronic device (35) has a normal operation mode (NOM) allowing full functions of the electronic device (35), and a restricted operation mode (ROM) allowing only a part or none of the full functions of the electronic device (35). In the normal operation mode (NOM), the electronic device (35) expects to receive a next upkeep code (NUC) within a specified upkeep time interval (UTI) after having received a previous upkeep code. In case an expected next upkeep code (NUC) is missing or incorrect, the electronic device (35) switches into the restricted operation mode (ROM). The next upkeep code (NUC) is generated and divided in a first part (1) and in a second part (2). The first part (1) is stored on the electronic device (35). A data sequence is received at the electronic device (35) as said second part (2). The stored first part (1) and the data sequence received as said second part (2) are combined at the electronic device. A combined code is obtained as a result of said combination step. A validity check is executed on the combined code at the electronic device (35). The combined code is accepted as the expected next upkeep code (NUC) only if said validity check is successfully passed within said upkeep time interval (UTI).

## Description

The present invention relates to a method of operating an electronic device, and an electronic device to execute said method.

Electronic devices are widely used in everyday life and business. Electronic devices include telecommunication devices such as mobile phones, smart phones or laptops with internet access, and data storage devices, such as personal digital assistants (= PDAs), or computers in general.

The loss of such electronic devices is most often very painful, both due to the value of the device itself, and due to the value of information stored on the lost electronic device. The loss of the information for a user of the electronic device may be avoided by taking back-up copies from time to time. However, if the information is confidential, the access of a third party to the confidential information can pose a huge problem. A loss of an electronic device may occur accidentally, e.g., when forgetting an electronic device at a customer's facility or in a taxi, or the loss of the electronic device can result from a criminal act (theft, robbery, industrial spying, etc.).

In order to protect electronic devices, it is known to bar the access to the full functions of the electronic device by a code. For example, state of the art computers require a manual input of a password after booting the computer. Only after having entered the password, there is access to the data stored on the computer. As another example, when a computer has not been used for a longer period of time, e.g. thirty minutes or so, proceeding with the use requires the manual input of the password again.

It is also known that a mobile phone, after having been switched on or after not having been used for some time, requires the input of a password for a normal operation mode (= NOM) allowing full functions of the mobile phone. As long as the password is not entered, the mobile phone can only be used in a restricted operation mode (= ROM), e.g., only emergency numbers (911 in the USA or 112 in Europe) can be reached. The operation condition of the electronic device when a password is requested can be considered a ROM, and after having entered the password, the electronic device is in the NOM.

However, password protection is not helpful when a thief obtains an electronic device in a NOM, i.e. unlocked. Further, the password protection may be insufficient when a thief has enough time to get physical access to the interior of the device. Moreover, an electronic device such as a laptop or PDA can be reused after a complete reset (factory reset). For mobile phones, it is known to have a SIM card blocked by a telecom operator to bar a thief from unauthorised use (SIM = Subscriber Identity Module). However, the thief may remove the blocked SIM card from the mobile phone and reuse the mobile phone with another, unblocked SIM card. For core network equipment, e.g., a base station router or a node B, there is often no protection at all.

It is the object of the present invention to provide a method of operating an electronic device with an enhanced protection level.

The object of the present invention is achieved by a method of operating an electronic device, wherein the electronic device has a normal operation mode allowing full functions of the electronic device, and a restricted operation mode allowing only a part or none of the full functions of the electronic device, whereby in the normal operation mode, the electronic device expects to receive a next upkeep code within a specified upkeep time interval after having received a previous upkeep code, and whereby in case an expected next upkeep code is missing or incorrect, the electronic device switches into the restricted operation mode, whereby the method comprises the steps of generating the next upkeep code, dividing the next upkeep code in a first part and in a second part, storing said first part on the electronic device, receiving, at the electronic device, a data sequence as said second part, combining, at the electronic device, the stored first part and the data sequence received as said second part and obtaining a combined code as a result of said combination step, executing, at the electronic device, a validity check on the combined code, and accepting the combined code as the expected next upkeep code only if said validity check is successfully passed within said upkeep time interval. Further, the object of the present invention is achieved by an electronic device comprising an operation mode controller for setting an operation mode of the electronic device, the electronic device having a normal operation mode allowing full functions of the electronic device and a restricted operation mode allowing only a part or none of the full functions of the electronic device, wherein the operation mode controller is adapted to check, during the normal operation mode, whether a next upkeep code is received within a specified upkeep time interval after having received a previous upkeep code, and to set the electronic device into the restricted operation mode in case an expected upkeep code is missing or incorrect, whereby the electronic device further comprises a storage unit adapted to store a first part of a generated next upkeep code after division of the next upkeep code into the first part and a second part, a receiver adapted to receive a data sequence as said second part, and a control unit adapted to combine the stored first part and the received data sequence and obtain a combined code as a result of said combination step, execute a validity check on the combined code, and accept the combined code as the expected next upkeep code only if said validity check is successfully passed within said upkeep time interval.

The present invention provides an enhanced security/protection level for an operation of an electronic device. An intruder, e.g., a thief of the electronic device, does not know what he needs to insert as the missing part (= second part) of the NUC for passing the validity check.

Even forcing access to the storage unit of the electronic device where the first part, and possibly the verification key and/or the password algorithm are stored, does not provide access to the electronic device. It is possible that the operation mode controller is bolted inside the electronic device, preferably within a sealed electronic chip, in a way that any damage to the bolt, e.g., to the seal of the electronic chip, switches on the ROM.

The invention provides value added security offering for users of electronic equipment, in particular mobile electronic equipment. For example, the invention offers mobile security over the Internet tailored to an implemented security policy level.

The present invention can be applied to a great variety of electronic devices: For example, mobile phones receive the NUC as a regular signal that keeps the mobile phone "alive". As soon as an authorised user and legitimate owner, respectively, of the electronic device notices that the electronic device was stolen, he can report the theft to a provider of the NUC provisioning service to stop the sending of the NUC second parts. For example, a laptop with a data card in a home office cannot be stolen from the home without getting the device blocked and/or all sensitive data deleted. For example, core network equipment, e.g., a base station router or a node B, can use this invention to disable them in case of being stolen and to protect its sensitive data from disclosure. For example, any usage of I/O-operations of electronic devices can be coupled with the need to getting immediately the NUC to insure that the device is still operating within the secure environment (I/O = input/output). If a higher security level is chosen, e.g., for PDAs and/or laptops of field staff working abroad, a next escalation stage after switching into the ROM may comprise starting an internal comprehensive data deletion routine when another condition is reached, e.g., a certain time period of being in the ROM has passed or an attempt to break a seal of the electronic device has occurred. Preferably, any military electronic devices which store secret data comprise the next escalation stage.

The invention can be implemented by using central equipment of an electronic device, e.g., in a SIM card of a mobile phone. The invention provides a high protection level by using the storage volumes available in today's electronic devices.

Further advantages are achieved by the embodiments of the invention indicated by the dependent claims.

It is possible that the data sequence is received at the electronic device as said second part after a user of the electronic device inputting the data sequence to the electronic device via an input means of the electronic device, e.g., manually on a keypad. It is also possible that the data sequence is received at the electronic device as said second part by receipt of the data sequence via a wireless interface or a wire-line interface of the electronic device, e.g., via a Bluetooth interface or a switch port to a network.

According to a preferred embodiment of the invention, the electronic device is provided with a password algorithm associated with the next upkeep code. The password algorithm may be transmitted to the electronic device once before the validity check, stored together with the first part on the electronic device and applied to all combined codes that were combined by using the second part NUCs received at the electronic device. If a result value gained by applying the password algorithm to the combined code is within a pre-specified range, the validity check is passed.

The transmission of the password algorithm to the electronic device may be conducted by sending data via a wireless/wire-line connection to the electronic device, e.g., after a request by a user of the electronic device via the Internet, or by inserting a tangible storage unit comprising the password algorithm into the electronic device. It is possible that a storage unit carrying the password algorithm is inserted into the electronic device manually or by a machine during a production process of the electronic device or during an update/extension process of the electronic device.

It is also possible that a password algorithm is transmitted together with the second part NUC to the electronic device. Each second part NUC may be associated with a specific password algorithm. The validity check is done by applying the password algorithm to the combined code that was combined by using the second part NUC received at the electronic device. If the result value gained by applying the password algorithm to the combined code is within a pre-specified range, the validity check is passed. The transmission of the password algorithm to the electronic device may be conducted via a wireless/wire-line connection. Preferably, the password algorithm in this case is a single-use algorithm.

According to another preferred embodiment of the invention, a verification key associated with the next upkeep code is generated, preferably by means of a password algorithm. The verification key and the password algorithm are transmitted to and stored on the electronic device. The transmission of the password algorithm and the verification key to the electronic device may be conducted via a wireless/wire-line connection or by inserting a storage unit comprising the password algorithm and the verification key into the electronic device, e.g., manually or by a machine. Said validity check is executed by means of said verification key and said password algorithm. The password algorithm is applied to the combined code and a result value resulting from the application is compared to the verification key. If the result value and the verification key are identical, the validity check has been passed with respect to the correctness of the next upkeep code. A very high security level can be ensured when transmitting the verification key and the password algorithm to the electronic device by inserting into the electronic device a tangible storage unit comprising the verification key and the password algorithm. Then, an eavesdropper has no possibility to eavesdrop the verification key and the password algorithm.

In a preferred embodiment, the electronic device expects a regular, recurring input of next upkeep codes according to a pre-defined schedule specified by the upkeep time interval. Each time the electronic device has received a next upkeep code (becoming in this moment a "previous" upkeep code), the electronic device expects to receive a next upkeep code within the upkeep time interval. Once an expected next upkeep code is missing or incorrect, the electronic device switches into the restricted operation mode. Therefore, it is preferable that the next upkeep code is not generated in a one-by-one process but in a comprehensive process, i.e., a list comprising two or more next upkeep codes. The number of next upkeep codes comprised within the list depends on the available memory of the storage unit of the electronic device and the cycle period when a next upkeep code is allowed to be re-used. The list of the two or more next upkeep codes is divided into two parts: a list of two or more first parts of the next upkeep codes, and a list of two or more second parts of the next upkeep codes, wherein the list of two or more first parts and the list of two or more second parts correspond to each other. The list of the two or more first parts of the next upkeep codes are stored on the electronic device.

Preferably, the entries of the list of the two or more second parts of the next upkeep codes are transmitted to the electronic device entry-by-entry.

Preferably, the entries of the list of the two or more second parts are transmitted sequentially. For example, a first entry of the list is transmitted during a first upkeep time interval, a second entry during a second upkeep time interval, a third entry during a third upkeep time interval, etc. When the electronic device receives a data sequence, it is assumed that the data sequence is an entry of said list of the two or more second parts of the next upkeep codes. The control unit combines the data sequence received as the entry of said list of the two or more second parts with a corresponding entry of the list of the two or more first parts stored on the electronic device and obtains a combined code as a result of said combination step. Then, a validity check is applied to the combined code, as described above.

Preferably, the password algorithm is a cryptographic hash algorithm, e.g., a MD5 ( = Message Digest Algorithm 5).

Preferably, the validity check comprises a check of a time parameter associated with the received second part. It is possible that the second part is used to generate a combined code only if the second part arrives within a pre-specified upkeep time interval. It is also possible that a validity check passed with respect to the correctness of the next upkeep code is executed on the combined code only if the combined code is available within a pre-specified upkeep time interval.

Preferably, the combined code is an input to the validity check. In the validity check, a correctness of the combined code is verified. The validity check may comprise that the control unit of the electronic device verifies whether the combined code or a value derived from the combined code lies within a specific value range or corresponds to a pre-defined verification value.

Preferably, the ratio of the second part to the first part is 1:1, but also smaller ratios, e.g., 3:7, or greater ratios, e.g., 7:3, may be realised. It is even possible that the second part comprises one hundred percent of the NUC, i.e., that the first part is practically null.

It is also possible that an empty NUC is transmitted, since the password algorithm may deliver a verification key even if the input NUC is empty. For example, if a MD5 algorithm is applied to an input sequence of zeros, the resulting hash value is a thirty-two hexadecimal sequence, as usual, i.e., the hash value resulting from an input sequence of zeros has the same volume as if using a input sequence not exclusively containing zeros.

In a preferred embodiment, the ratio of the second part to the first part is chosen as a function of one or more of the following parameters: the upkeep time interval, a sequence length of the next upkeep code, a bandwidth available for transmission, a requested protection level for a given electronic device and password algorithm. The chosen ratio represents a deliberate weighting between synchronisation efforts against storage efforts, e.g., by a realisation on a SIM card.

It is also possible that the lengths of the second parts of the NUCs that are transmitted to the electronic device are allowed to differ, i.e., if there is only a definition of a maximum length of a NUC, e.g., 16 Byte. In this case, this provides the advantage that the NUC is even harder to predict for an eavesdropper. The maximum length may be defined as a function of a bandwidth available for transfer purposes to the electronic device.

According to another preferred embodiment of the invention, a time synchronisation is applied to the next upkeep code by associating a time string with the data sequence. The data sequence is sent together with the associated time string to the electronic device. The data sequence and the associated time string are received at the electronic device. The electronic device executes a synchronicity check on the received data sequence by means of the time string. An actual time string is deducted from the received data first. Any mismatch in time must lead to a no-pass of the synchronicity check. The received data sequence is processed in said combination step only if said synchronicity check is successfully passed. Enhanced security is provided if NUCs are timely synchronised. An intruder would have to generate the repetitive NUC in order to keep the normal operation mode alive. So, without a time synchronisation any re-transmitted NUC could keep the normal operation mode alive, fraudulently via a replay attack.

Preferably, a time parameter associated with the second part is an input to the validity check. In the validity check a correctness of the time parameter is verified. The validity check may comprise that the control unit of the electronic device verifies whether the arrival time of the second part at the electronic device lies within a specific time interval or corresponds to a pre-defined time value.

It is also possible that the received second parts or combined codes or expected NUCs are stored on the electronic device and checked for avoiding any repetitive usage. After accepting one or more previously received combined codes as expected next upkeep codes, the control unit stores the accepted upkeep codes in the storage unit of the electronic device. After obtaining the next upkeep code as a result of said combination step, the control unit compares said next upkeep code with the one or more stored previous upkeep codes for avoiding any repetitive usage of the code.

Preferably, a list of NUCs is chosen wherein the number of NUC entries in the list is so big that a repetitive usage of the list (after transmitting a last of the list, a first entry of the list is re-transmitted) occurs after a sufficiently long cycle. A cycle is considered sufficiently long if an eavesdropper would have to listen to the transmittance of the second parts for days or even years, which makes eavesdropping practically impossible. The storage volumes available today in electronic devices, e.g., a SIM card, allow the cycle to be chosen in the range of days and years. By choosing a cycle of the next upkeep codes longer than a practicable eavesdropping period, a replay attack becomes useless.

Preferably, control information is integrated in the first part and/or in the second part of the next upkeep code. Having accepted the combined code as the expected next upkeep code, said control information is extracted from the next upkeep code and implemented. The control information may be used by a NUC provisioning unit, e.g., an operator or service provider, to control the operation of the NUC-based protection service on the electronic device. The control information may comprise commands triggering a switch-on or a switch-off of the NUC-based protection service on the electronic device.

Preferably, the functionality of said storage unit and said control unit are provided by a SIM card. This way, the storage power of the SIM card and the fast interface between the SIM card and the handset is utilised for a security purposes. The invention takes advantage of the existing SIM card capabilities: SIM cards are already able to store large amounts of NUCs and are also able to operate as a smart card allowing to execute a password function.

These as well as further features and advantages of the invention will be better appreciated by reading the following detailed description of presently preferred exemplary embodiments taken in conjunction with accompanying drawings of which:
- Fig. 1: is a block diagram illustrating a method according to an embodiment of the invention;
- Fig. 2: is a block diagram showing a list of next upkeep codes according to an embodiment of the invention; and
- Fig. 3: is a block diagram showing first and second parts of a list of next upkeep codes according to an embodiment of the invention.

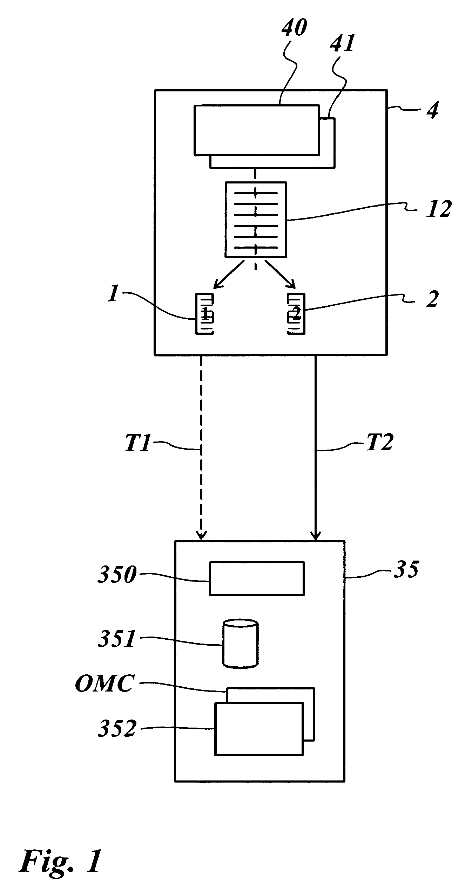

Fig. 1 shows a NUC provisioning unit 4 comprising a control unit 40 and a NUC generator 41. The NUC provisioning unit 4 may be a network node, e.g. a server or a mobile phone, of a telecommunication network, e.g. a computer network or a mobile telephone network. For example in a mobile network, the NUC provisioning unit 4 may be implemented in a secure environment of the mobile network, e.g., in a server park of a mobile operator. It is also possible that the NUC provisioning unit 4 is a stand-alone unit, e.g. a PC or a vehicle computer (PC = Personal Computer). The control unit 40 controls the function of the NUC provisioning unit 4, in particular the execution of a NUC provisioning service. The NUC generator 41 generates one or more NUCs. Preferably, the NUC provisioning unit 4 represents a secure environment allowing authorised access, only.

The NUC provisioning unlit 4 is composed of one or several inter-linked computers, i.e., a hardware platform, a software platform basing on the hardware platform and several application programs executed by the system platform formed by the software and hardware platform. The functionality of the NUC provisioning unit 4 is provided by the execution of these application programs. The application programs or a selected part of these application programs constitute a computer software product providing a NUC provisioning service as described in the following, when executed on the system platform. Further, such computer software product is constituted by a storage medium storing these application programs or said selected part of application programs.

A user of an electronic device 35 may wish to provide the electronic device 35 with an increased protection level, e.g. in order to protect data stored on the electronic device 35 from unauthorised access by a thief of the electronic device 35 or to disable the electronic device 35 in case it is removed from a predefined area. The user may trigger the electronic device 35 to send a request to the NUC provisioning unit 4 for requesting the NUC provisioning service. The electronic device 35 may communicate with the NUC provisioning unit 4 through wireless telecommunication means, e.g., via UMTS, or through wire-line telecommunication means, e.g., via telephone lines or other electric connecting means (UMTS = Universal Mobile Telecommunications System).

It is possible that the user subscribes to the NUC provisioning service of the NUC provisioning unit 4. The subscription process, preferably liable to the payment of charges, may be initiated by the user contacting, e.g., by telephone, email or online via Internet, an application and/or an operator of the NUC provisioning unit 4.

The electronic device 35 comprises a receiver 350, a storage unit 351, a control unit 352 and an operation mode controller OMC. The electronic device 35 is composed of one or several inter-linked computers, i.e., a hardware platform, a software platform basing on the hardware platform and several application programs executed by the system platform formed by the software and hardware platform. The functionality of the electronic device 35 is provided by the execution of these application programs. The application programs or a selected part of these application programs constitute a computer software product providing a NUC-based protection service as described in the following, when executed on the system platform. Further, such computer software product is constituted by a storage medium storing these application programs or said selected part of application programs.

The control unit 40, triggered by the request for the NUC provisioning service, starts a NUC provisioning procedure: first, the control unit 40 triggers the NUC generator 41 to generate a list 12 of next upkeep codes NUC. The NUC generator 41 generates, starting from random numbers, a list 12 comprising n NUCs, each of the n NUCs consisting of a sequence of m characters (letters, numerals, punctuation marks, symbols, etc.), i.e., a sequence with a maximum length of m bytes. For each of the n NUCs, the NUC generator 41 generates by means of a password algorithm F a verification key K, i.e., a unique response comprising q bytes.

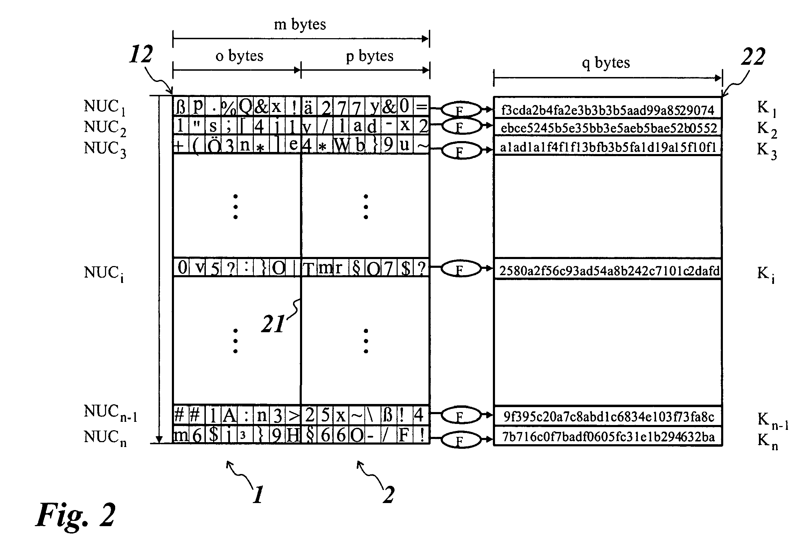

Fig. 2 shows the list 12 comprising n NUCs NUC₁, NUC₂, NUC₃, ..., NUCᵢ, ..., NUCₙ₋₁, NUCₙ, each of the n NUCs consisting of a sequence with a maximum length of m bytes, and a list 22 of n verification keys K₁, K₂, K₃, ..., Kᵢ, ..., Kₙ₋₁, Kₙ, each of the n verification keys consisting of a sequence of q bytes. The list 22 of the n verification keys K₁, K₂, K₃, ..., Kᵢ, ..., Kₙ₋₁, Kₙ is generated by applying the password algorithm F to the list 12 of the n NUCs NUC₁, NUC₂, NUC₃, ..., NUCᵢ, ..., NUCₙ₋₁, NUCₙ. In the embodiment shown in Fig. 2, the list 12 comprises n NUCs, each with a length of sixteen characters (m = 16), i.e., sixteen bytes. The password algorithm F may be a MD5 hash algorithm which produces to each of the n NUCs NUC₁, NUC₂, NUC₃, ..., NUCᵢ, ..., NUCₙ₋₁, NUCₙ a hash K₁, K₂, K₃, ..., Kᵢ, ..., Kₙ₋₁, Kₙ of thirty-two hexadecimal digits (q = 32).

As shown in Fig. 1, the NUC generator 41 divides the list 12 comprising the n NUCs into two parts, a first part 1 and a second part 2. As shown in Fig. 2, the division line 21 of a NUC NUC₁, NUC₂, NUC₃, ..., NUCᵢ, ..., NUCₙ₋₁, NUCₙ may be at any position of the NUC. In general, the first part 1 comprises o bytes and the second part 2 comprise p bytes, whereby o + p = m. Fig. 2 shows an example where the division line 21 intersects each of the NUCs NUC₁, NUC₂, NUC₃, ..., NUCᵢ, ..., NUCₙ₋₁, NUCₙ into two equally sized parts 1, 2, each part 1, 2 comprising eight bytes (o = p = 8). The NUC may be broken into two parts, the first part 1 and the second part 2, at any preferred ratio. It is even possible that the second part 2 comprises the entire NUC and that the first part 1 is null, i.e., empty. It is also possible that said NUC ratio varies, e.g., in a random manner or in a pre-defined manner, during a cycle.

It is important to note that it does not matter whether a front part or a tail part of a divided NUC is transmitted. The idea is that one part of a NUC is stored in the electronic device and another, complementary part of that NUC is transmitted later to the electronic device. When combined at the electronic device, the two parts form a complete NUC, again.

The second part 2 of the list 12 stays inside the secure environment or the NUC provisioning unit 4. The second part 2 comprises the n first parts of the n NUCs, i.e., a volume of n x p bytes, wherein x stands for the multiplication sign "times". Each second part of the n second parts will later be sent T2 piecewise to the electronic device 35.

The first part 1 of the list 12 and the corresponding list 22 of the n verification keys K are transferred T1 to the electronic device 35 and stored in the storage unit 351. The first part 1 comprises the n second parts of the n NUCs, i.e., a volume of n x o bytes. The list 22 of the n verification keys K comprises a volume of n x q bytes. Thus, the storage unit 351 must provide a storage space of n x (o + q) bytes.

After the first part 1 of the NUC list 12 and the list 22 of the n verification keys K have been transferred T1 to the electronic device 35, the electronic device may be armed, i.e., the execution phase of the protection method involving the NUCs may be initiated. This initiation may be requested by the user of the electronic device 35. It is also possible that there is an automatic initiation, preferably at a pre-defined time or after a pre-defined condition is reached.

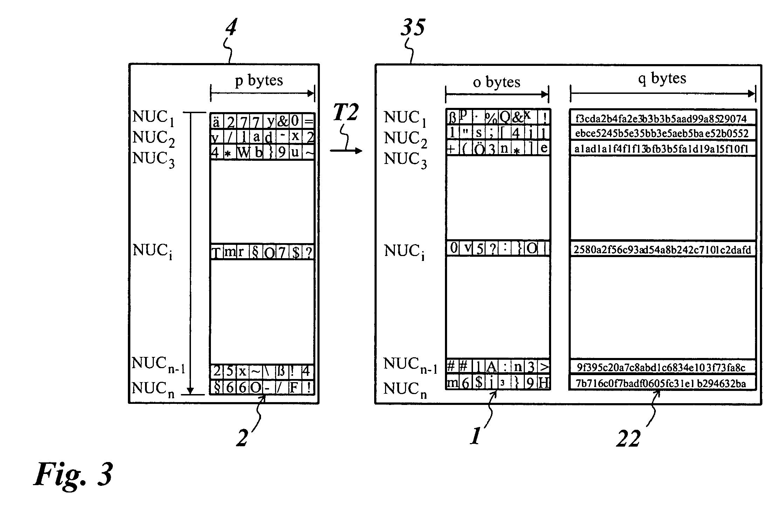

Fig. 3 shows a schematic of this execution phase. Each entry NUCᵢ of the second part 2 is sent T2 separately, i.e., entry by entry, from the NUC provisioning unit 4 to the electronic device 35. The receiver 350 receives an entry NUCᵢ of the second part 2 and forwards it to the control unit 352. The control unit 352 receives the entry NUCᵢ of the second part 2, retrieves a corresponding entry NUCᵢ of the first part 1 and a corresponding verification key 22 from the storage unit 351, and combines the first part 1 with the corresponding second part 2. The control unit 352 obtains a combined code as a result of said combination.

The control unit 352 executes a validity check on the combined code. The control unit 352 applies the password algorithm F to the combined code and a key is calculated, i.e., the password algorithm F provides the key. The control unit 352 compares the provided key with the verification key 22. If the provided key is identical with the verification key 22, a first condition of the validity check has been successfully passed. If the provided key is not identical with the verification key 22, the validity check has failed. As a consequence, the control unit 352 instructs the operation mode controller OMC to change in the restricted operation mode.

As a second condition of the validity check, the electronic device 35 must receive the entry NUCᵢ of the second part 2within a pre-specified upkeep time interval UTI. The UTI is an interval which starts when a previous upkeep code has been received. Note that typically, the UTIs are constant and range from five seconds to one day, and preferably from one minute to one hour; however in some cases UTIs in the milliseconds range may be useful. Note that shorter UTIs increase the protection level.

The control unit 352 checks whether the entry NUCᵢ of the second part 2 has been received at the electronic device 35 within a pre-specified upkeep time interval UTI. If so, a second condition of the validity check and therefore the whole validity check is successfully passed. As a consequence, the control unit 352 instructs the operation mode controller OMC to stay in the normal operation mode. If not, the second condition of the validity check and therefore the whole validity check has failed. As a consequence, the control unit 352 instructs the operation mode controller OMC to change in the restricted operation mode.

Therefore, even if the provided key was identical with the verification key 22 but the entry NUCᵢ of the second part 2 had not been received at the electronic device 35 within a pre-specified upkeep time interval UTI, the validity check would have failed. As a consequence, the control unit 352 would instruct the operation mode controller OMC to change in the restricted operation mode.

In many cases, it is not practical to utilise true one-time NUCs since this might involve a considerably big amount of data to be handled (e.g., pre-stored on the electronic device). Instead, it is more practical to cycle a pre-defined list of NUCs, i.e., to repeat the usage of the same NUC list after the end of that NUC list has been reached. However, the cycle intervals may be chosen so that it is actually impossible for an attacker to re-use a NUC list that has been eavesdropped. The following examples have been compiled with regard to the storage space that must be provided by the storage unit 351 of the electronic device 35.
Example a): 64 single 16-digit sequences (= NUC) represent 1 KByte.
Example b): 64*1024 single 16-digit sequences (= NUC) represent 1 MByte.
Example c): 64*1024*1024 single 16-digit sequences (= NUC) represent 1 GByte.
Example d): If UTI = 1 sec then example a) cycles after 64 seconds, which is not feasible, does not offer enough security against eavesdropping.
Example e): If UTI = 1 sec then example b) cycles after 18 hours, which may not be feasible, does not offer a high level of security against eavesdropping.
Example f): if UTI = 1 sec then example c) cycles after 2.1 years which may be feasible, provides a high level of security against eavesdropping.
Example g): If UTI = 60 sec then example a) cycles after 1.1 hours which may not be feasible, does not offer enough security against eavesdropping.
Example h): If UTI = 60 sec then example b) cycles after 45 days which may be feasible, provides a certain level of security against eavesdropping.
Example i): If UTI = 60 sec then example c) cycles after 127.6 years which is definitely feasible, provides an extremely high level of security against eavesdropping. In this case it makes sense to reduce the memory requirements. Here, for example, a storage space of ½ GByte will be sufficient for a cycle of approximately 64 years, what still seems to be more than enough. Any trade-off between memory requirements and cycle-times may be chosen according to a pre-defined policy, preferably predefined by a user of the electronic device or a service provider.

Today, SIM cards offering a storage space in a range between 1 MByte and 1 GByte are available. Therefore, it would be feasible to execute the described method by means of a SIM card of a modern mobile phone.

The provision of 1 Megabyte memory for the NUCs with an UTI of 1 hour results in a practically very feasible cycle of 7.5 years. If only the second half of the list is stored on the electronic device 35 then only 0.5 MByte of memory are needed for the NUCs.

The length of the chosen password algorithm F determines the storage needs for the verification keys K, which are also stored on the electronic device 35. For example, an MD5 algorithm would require 1024*64*32 bit = 2 MByte in addition to the above 0.5 MByte which are needed for the NUCs.

A real implementation depends on the sought level of security. Shorter cycles with less memory requirements over known pre-scrambled NUCs are also possible, but less secure. An encrypted transmission of control commands within the m bits of a NUC can also reduce the amount of exchanged data and thus balance security needs versus available bandwidth and memory.

The NUC provisioning unit 4 and the electronic device 35 may represent a pair (of devices) which must not be brought apart. Thus, the method according to the present invention is suited to address the following exemplary scenarios I to VII:
I) Removal of a SIM card from a mobile phone. In this case, the mobile phone may transmit NUCs to the SIM card, the UTI being in a range of seconds or milliseconds.
II) Removal of a mobile phone from a room. In this case, the NUCs may be transmitted, e.g., via Bluetooth from a PC in the room to the mobile phone.
III) Removal of a vehicle computer from the interior of the vehicle. In this case, the NUCs may be provided to the vehicle computer from a sealed compartment of the vehicle, e.g., a welded area, via Bluetooth interface. Thus, coupling the operation of any electronic device, e.g., a commodity device, left in the interior of a vehicle to an unpredictable receipt of NUCs which are provided, e.g., via Bluetooth, by a NUC provisioning unit of the vehicle, whereby the NUC provisioning unit is preferably practically inaccessible by a thief, e.g., welded into the body of the vehicle, provides a very strong protection against theft.
IV) Removal of a car audio unit from the interior of the vehicle. In this case, the NUCs may be transmitted from a car computer to the audio unit.
V) Removal of a mobile phone (cell phone, smartphone, PDA, laptop, e.g., with an UMTS card) from a coverage area / cell of a mobile network, e.g., after theft and switch-off of the mobile phone. In order to provide protection against this scenario, a user of the mobile phone could request, e.g., by sending a SMS message, a provider of a NUC provisioning service to provide this NUC provisioning service (SMS = Short Message Service). The provider may generate a NUC list in real time and send the second part of the NUC list together with the verification keys to the electronic device.
   An electronic mobile telecommunications device can always be located in a mobile radio network. If the stolen electronic device is detected to leave a pre-defined coverage area, e.g., being transported abroad by a thief, the absence of NUCs at the electronic device results leads to the electronic device changing into the restricted operation mode ROM. In a similar way, also a GSM/UMTS module in a car in connection with a UTI in a range of days and/or a trigger mechanism based on a travel distance of the car could be used as an area-related protection system which could become activated when leaving a coverage area of a particular mobile network (GSM = Global System for Mobile Communications).
VI) Removal of a computer from a server room. In this case, the NUCs may be provided to the computer from other computers in the same room, a private home network, e.g., a WLAN router, or directly via a modem from the Internet (WLAN = Wireless Local Area Network).
VII) Control of a steady and proper connection of a baby phone (parents' device) with a base station (baby's device). If a NUC is missing (power failure in baby's room, radio interference, distance between parents' device and baby's device exceeds predefined value), an alarm at the parents' device is triggered (UTI in a range of seconds). This variant can be managed without a high encryption level, thus has a very low memory demand.

In general, a very secure implementation level with regard to a PC, laptop and mobile phone is provided by a hardware-based/related approach, e.g., in the BIOS (= Basic Input Output System), SIM card.

For the transmission of control information, it is possible that a certain amount of bytes are left blank in the NUC sequences. For example, instead of working with NUCs with a length of m = 16 bytes, NUCs with a length of m = 12 bytes may be used and the remaining bandwidth of 4 bytes may be used to transmit control information. The first part 1 may continue to comprise 8 byte but the second part 2 may now only comprise 4 byte. The 4 byte left-free in the sequence of the second part 2 are used to transport control information to the electronic device 35.

For example, a user of the electronic device 35 wants the NUC protection service to be shut off during a pre-defined time interval, e.g., during a long-distance flight where the electronic device cannot receive NUCs from a base station of a mobile telecommunications network. The user informs a provider/operator of the NUC provisioning service about his request. The user may log in to a customer server of the provider, e.g., by authorisation by means of a customer password, and give the necessary input with regard to his request. The provider may then insert at the requested time a control information in the left-free space of the sequence of the second part 2. For example, the control information comprises a command, e.g., comprising a master code, which triggers the electronic device to interrupt the NUC protection service. That means that the electronic device does not expect another NUC until the provider sends another control information, e.g., comprising the master code, triggering the electronic device to resume the NUC protection service.

Generally, it is possible that the NUC-based protection service, once initiated, can not be shut off/interrupted any more, or that the NUC-based protection service, once initiated, can only be shut off/interrupted by means of a master code, only known by a provider/operator of the NUC-based protection service and/or an authorised user/owner of the electronic device.

It is preferable not to distribute the NUC first parts and/or the corresponding verification keys and/or the corresponding password algorithm via an interface where an eavesdropper may have access to. In a preferred embodiment, it is possible that a user of an electronic device visits a local distributor who cooperates with a provider of a NUC provisioning service. The local distributor arranges that the user's electronic device is provided with a security data update. For example, the local distributor triggers that a data set comprising NUC first parts and corresponding verification keys and a corresponding password algorithm is loaded on a data storage unit of the electronic device, e.g. the SIM card of a mobile phone. Then, the user can initiate the receipt of the NUC second parts via a wireless interface, e.g., by dialling a service number associated with a provider of a NUC provisioning service and preferably by indicating to the provider of the NUC provisioning service an ID code specifying the data set that was loaded on the electronic device (ID = identifier/identification). Thus, the provider of a NUC provisioning service is enabled to identify, by help of the ID code the correct second parts, and transmits the second parts to the electronic device, e.g., via a WAP or UMTS interface (WAP = Wireless Application Protocol).

It is also possible that an up-graded SIM card comprising a data set comprising NUC first parts and corresponding verification keys and a corresponding password algorithm is inserted into the electronic device, when a buyer of the electronic device indicates to a dealer that he wants the possibility to use a NUC provisioning service. The electronic device comprising said up-graded SIM card, a user of the electronic device has the option to initiate the receipt of the NUC second parts via a wireless interface, e.g., as described above.

## Claims

1. A method of operating an electronic device (35), wherein the electronic device (35) has a normal operation mode allowing full functions of the electronic device (35), and a restricted operation mode allowing only a part or none of the full functions of the electronic device (35), whereby in the normal operation mode, the electronic device (35) expects to receive a next upkeep code (NUC) within a specified upkeep time interval (UTI) after having received a previous upkeep code, and whereby in case an expected next upkeep code (NUC) is missing or incorrect, the electronic device (35) switches into the restricted operation mode, whereby the method comprises the steps of:
generating the next upkeep code (NUC);
dividing the next upkeep code (NUC) in a first part (1) and in a second part (2);
storing said first part (1) on the electronic device (35);
receiving, at the electronic device (35), a data sequence as said second part (2);
combining, at the electronic device, the stored first part (1) and the data sequence received as said second part (2) and obtaining a combined code as a result of said combination step;
executing, at the electronic device (35), a validity check on the combined code; and
accepting the combined code as the expected next upkeep code (NUC) only if said validity check is successfully passed within said upkeep time interval (UTI).

2. The method of claim 1,
**characterised in**
**that** the method further comprises the steps of:
providing the electronic device (35) with a password algorithm (F) associated with the next upkeep code (NUC); and
executing said validity check by means of the password algorithm (F).

3. The method of claim 1,
**characterised in**
**that** the method further comprises the steps of:
generating a verification key (K) associated with the next upkeep code (NUC);
storing, together with said first part (1), the verification key (K) and a password algorithm (F) on the electronic device (35); and
executing said validity check by means of said verification key (K) and said password algorithm (F).

4. The method of claim 1,
**characterised in**
**that** the method further comprises the step of:
generating a list (12) of two or more next upkeep codes (NUC₁, NUC₂, NUC₃, ..., NUCᵢ, ..., NUCₙ₋₁, NUCₙ);
dividing the list (12) of the two or more next upkeep codes (NUC₁, NUC₂, NUC₃, ..., NUCᵢ, ..., NUCₙ₋₁, NUCₙ) in a list of two or more first parts (1) of the next upkeep codes (NUC₁, NUC₂, NUC₃, ..., NUCᵢ, ..., NUCₙ₋₁, NUCₙ) and in a corresponding list of two or more second parts (2) of the next upkeep codes (NUC₁, NUC₂, NUC₃, ..., NUCᵢ, ..., NUCₙ₋₁, NUCₙ);
storing the list of the two or more first parts (1) of the next upkeep codes (NUC₁, NUC₂, NUC₃, ..., NUCᵢ, ..., NUCₙ₋₁, NUCₙ) on the electronic device (35);
receiving, at the electronic device (35), a data sequence as an entry of said list of the two or more second parts (2) of the next upkeep codes (NUC₁, NUC₂, NUC₃, ..., NUCᵢ, ..., NUCₙ₋₁, NUCₙ); and
combining, at the electronic device (35), the data sequence received as an entry of said list of the two or more second parts (2) of the next upkeep codes (NUC₁, NUC₂, NUC₃, ..., NUCᵢ, ..., NUCₙ₋₁, NUCₙ) and a corresponding entry of the list of the two or more first parts (1) of the next upkeep codes (NUC₁, NUC₂, NUC₃, ..., NUCᵢ, ..., NUCₙ₋₁, NUCₙ) and obtaining a combined code as a result of said combination step.

5. The method of claim 1,
**characterised in**
**that** the method further comprises the step of:
choosing the ratio of the second part (2) to the first part (1) as a function of one or more of the following parameters: the upkeep time interval (UTI), a sequence length of the next upkeep code (NUC), a bandwidth available for transmission, a requested protection level.

6. The method of claim 1,
**characterised in**
**that** the method further comprises the steps of:
applying a time synchronisation to the next upkeep code (NUC) by associating a time string with the data sequence and sending the data sequence together with the associated time string to the electronic device (35);
receiving the data sequence and the associated time string at the electronic device (35);
executing, at the electronic device (35), a synchronicity check on the received data sequence by means of the time string; and
processing the received data sequence in said combination step only if said synchronicity check is successfully passed.

7. The method of claim 1,
**characterised in**
**that** the method further comprises the steps of:
integrating control information in the second part (2) and/or in the first part (1) of the next upkeep code (NUC);
after accepting the combined code as the expected next upkeep code (NUC), extracting said control information from the next upkeep code (NUC); and
implementing the extracted control information.

8. The method of claim 1,
**characterised in**
**that** the method further comprises the steps of:
using a cryptographic hash algorithm as said password algorithm (F).

9. An electronic device (35) comprising an operation mode controller (OMC) for setting an operation mode of the electronic device (35), the electronic device (35) having a normal operation mode allowing fuii functions of the electronic device (35) and a restricted operation mode allowing only a part or none of the full functions of the electronic device (35), wherein the operation mode controller (OMC) is adapted to check, during the normal operation mode, whether a next upkeep code (NUC) is received within a specified upkeep time interval (UTI) after having received a previous upkeep code, and to set the electronic device (35) into the restricted operation mode in case an expected upkeep code is missing or incorrect, whereby the electronic device (35) further comprises a storage unit (351) adapted to store a first part (1) of a generated next upkeep code (NUC) after division of the next upkeep code (NUC) into the first part (1) and a second part (2), a receiver (350) adapted to receive a data sequence as said second part (2), and a control unit (352) adapted to combine the stored first part (1) and the received data sequence and obtain a combined code as a result of said combination step, execute a validity check on the combined code, and accept the combined code as the expected next upkeep code (NUC) only if said validity check is successfully passed within said upkeep time interval (UTI).

10. The electronic device of claim 9,
**characterised in**
**that** said storage unit (351) and said control unit (352) are included in a SIM card.
